# EUROPEAN PATENT SPECIFICATION

(11) **EP 1 638 767 B1**
(45) Date of publication and mention of the grant of the patent: **16.01.2008**
(21) Application number: 05726512.6
(22) Date of filing: 06.05.2005
(51) Int. Cl.: A01M 1/20, A01M 25/00

(54) **BAIT STATIONS**
KÖDERSTATIONEN
POINTS D'APPAT

(30) Priority: 11.05.2004 US 569906 P
(43) Date of publication of application: 29.03.2006
(73) Proprietor: S.C. Johnson & Son, Inc., Racine, WI 53403 (US)
(72) Inventor: DUSTON, Tyler, D., Evanston, IL 60202 (US); MINEAU, Steven, B., Racine, WI 53406 (US); MADALA, William, G., Racine, WI 53402 (US); NICKEL, Dirk, K., Mukwonago, WI 53149 (US); MEIER, Maude, Christian, Racine, WI 53402 (US); SCHUMACHER, Donald, J., Racine, WI 53403 (US)
(74) Representative: Ruschke, Hans Edvard
(86) International application number: PCT/US2005/015834
(87) International publication number: WO 2005/110732

(56) References cited:
- EP-A- 0 793 913
- US-A- 3 587 968
- US-A- 4 837 969
- US-A- 5 501 033
- US-B1- 6 553 712

## Description

### DETAILED DESCRIPTION OF THE INVENTION

The present invention relates to bait stations, preferably insecticidal bait stations, for the control of various pests such as cockroaches and ants.

A variety of devices for holding poisonous bait to control crawling pests are known. These range from simple cardboard tubes open at both ends with a toxic bait glued inside, to more elaborate structures that have a centrally enclosed bait accessible by peripheral openings. Some of these devices are configured to hold a solid bait/toxicant preparation. "Solid" in this context means a non-pourable substance such as pastes, highly viscous gels, firm solids, and the like. For example, U.S. Pat. No. 4,837,969 shows an insect bait station suitable for holding a solid bait.

Other insect control devices are configured to make available to crawling pests a liquid bait/toxicant. For example, U.S. Pat. No. 5,033,229 discloses a bait station for passive control of insects, particularly roaches, that provides a source of a liquid bait-toxicant solution, and U.S. Pat. No. 5,501,033 discloses other techniques for the controlled delivery of a liquid insecticidal bait.

Some insect control devices are configured to hold both a liquid and a solid bait/ toxicant, with those toxicants separately retained. For instance, U.S. Pat. No. 2,167,978 discloses an insect control device having a paralyzing insect powder as well as a liquid attractant (water) wicked upwardly to a desired position from a reservoir; U.S. Pat. No. 5,339,563 discloses the use of a liquid positioned adjacent an insecticidal material; and U.S. Pat. No. 5,749,168 discloses an insect control device having liquid and solid bait.

Still other bait stations have been provided containing solid, liquid, and/or both type, bait/toxicants. See e. g. U. S. Pat. Nos. 4,630,755, 4,837,969, 5,038,516, 5,040,327, 5,531,043, 6,553,712, and U. S. patent application publication 2004/0079025.

While insect bait stations that offer both a solid poisonous "meal" and a poisonous "drink" are quite advantageous, as crawling insects will be enticed to consume both solid and liquid poisonous materials, they are also advantageous because certain types of pests prefer liquid baits while others prefer solid baits. A bait station with both types of baits can therefore control a wider variety of pests.

However, currently available insect control devices that include liquid baits do not provide for an optimally convenient means for sealing the liquid during transport and storage, and then releasing the liquid for access by the pest when the insect bait station is placed into service. U. S. Pat. Nos. 4,247,042, 4,526,320, 3,727,840 and 5,875,968 disclose vaporizers in which a liquid, for example an insecticide solution or a deodorizing liquid, is contained in a reservoir having a readily breakable closure. The closure is pierced when the device is first activated allowing the volatile liquid to escape. However, these structures are used in vaporizer units.

U. S. patent 6,553,712 discloses a bait station having a lower reservoir for holding a liquid bait/ insecticide. That reservoir is covered by a pierceable upper wall. By pressing down on the cover, the cover drives a cage in which a wick is housed, with the cage splitting the pierceable wall to place the wick element in communication with the liquid through the sides of the cage. However, the presence of the cage slows the contact of the wick and the fluid. Further, the cage can be somewhat difficult to construct.
Document US-A-5501033 shows a bait station that allows the sequential delivery of two liquids to a feeding pad. The liquids are contained in reservoirs, one on top of the other and connected via a tube within a guide. Prior to use both reservoirs are isolated from the tube by a seal. To activate the device the two reservoirs are forced together which breaks the seals. It also allows liquid from the lower reservoir to enter the feeding pad. The pre-characterizing part of claim 1 is based on this document.

Thus, there is still a need for a bait station that provides a convenient and inexpensive means for safely containing liquid bait during transport and storage, and then for activating the liquid bait when the insect bait station is placed into service.

### SUMMARY OF THE INVENTION

The invention provides a bait station for controlling pests as defined in claim 1 below. The station comprises a container housing a liquid toxicant, wherein the container includes an access port enclosed with a seal, a cover positioned over the container, a wick and a retaining structure for mounting the wick over the access port. Downward movement of a portion of the cover section can drive the wick directly against the seal in the access port to drive the wick through the access port and into contact the liquid toxicant in the container.

In one preferred form, the seal comprises a piercable section of the container. The piercable section can be provided in an upper wall of the container.

The upper wall of the enclosed container can also include an open recess at least partially housing a solid bait and an upwardly directed collar which surrounds the pierceable section and serves to guide vertical movement of the wick.

In another preferred form the seal is provided by a lower sealing cap directly affixed to a lower end of the wick.

The movable portion of the cover is most preferably a bi-stable flexible area of the cover which has an upward position prior to use of the device and a downward position once the device is activated.

A bait station for controlling pests according to the invention comprises an enclosed container housing a liquid toxicant, the enclosed container including an upper portion with a pierceable section, a cover section positioned over the enclosed container, a base section coupled to the cover, a wick, and a retaining structure for mounting the wick over the pierceable section between the cover section and base section. Downward movement of a portion of the cover section drives the wick against the pierceable section to cause the wick to pierce the pierceable section and contact the liquid toxicant in the enclosed container.

The enclosed container of the bait station includes a substantially rigid upper portion. A guide sleeve is formed in the substantially rigid upper portion of the enclosed container to provide the retaining structure, and an open recess can be formed in the substantially rigid upper portion for receiving a solid bait.

The bait station may comprise a seal coupled to the rigid upper portion to provide the enclosed container. The seal can be a flexible film.

In yet another preferred form of the invention, at least one of the cover and the base can comprise a plurality of tabs and the other of the cover and the base can comprise a plurality of mating apertures for receiving the tabs to couple the cover to the base.

In another embodiment but not according to the invention, a bait station for controlling a pest is provided comprising a housing which is substantially pie wedge-shaped in top view, bait and toxicant is provided within the housing, and first and second spaced entrances provided along a curved side of the housing.

The housing comprises a cover section coupled to a base section, and an enclosed container can be received between the cover section and the base section for housing the bait and toxicant. The enclosed container can include an upper portion with a pierceable section, a wick, and a guide sleeve formed in the enclosed container for mounting the wick over the pierceable section. An upper wall of the enclosed container comprises a substantially rigid material, and a film sheet that can be sealed to an edge of the upper wall to form the enclosed container.

The term "molding" as used herein includes thermoforming, blow molding, injection molding, and other conventional means of creating shaped plastic parts.

The structures of the present invention allow liquid bait to be safely stored during shipment and prior to use. A consumer can, in a highly intuitive manner, press down on the cover of the bait station to cause the wick to access the liquid bait. No complex cages are required to protect the wick. The wick either directly breaks the pierceable section, or directly carries a seal with no need for a pierceable section.

The stations can be sized to be appropriate for a target pest and permit access by both crawling and flying insects and other pests (e.g. rodents), regardless of how the device is positioned relative to the walls of a room. Further, they can be inexpensively produced.

These and still other advantages of the present invention will appear from the following description. In that description reference is made to the accompanying drawings in which there is shown by way of illustration preferred embodiments of the invention. However, still other embodiments are meant to be within the scope of the invention.

### BRIEF DESCRIPTION OF THE DRAWINGS

FIG. 1 is a perspective view of one embodiment of a bait station constructed in accordance with the present invention, in process of attracting a pest;

FIG. 2 is a vertical sectional view of the FIG: 1 bait station;

FIG. 3 is an enlarged view of a portion of the FIG. 2, albeit showing the structure after the cover has been pressed to drive the wick downward;

FIG. 4 is a view similar to that of FIG. 3, but of an alternative embodiment, prior to activation;

FIG. 5 is a view similar to that of FIG. 4, albeit with that FIG. 4 bait station activated;

FIG. 6 is a view similar to FIG. 4 but of a third embodiment having a support core extending down the center of the wick (the core then constituting a part of the wick);

FIG. 7 is a view similar to that of FIG. 6, but of a fourth embodiment having an angled lower wick end;

FIG. 8 is a further enlarged view of the FIG. 7 embodiment, albeit after activation, which may be constructed in one of two variants with respect to a venting system;

FIG. 9 is a first alternative sectional view taken along the line 9. 10 - 9, 10 of FIG. 8;

FIG. 10 is a second alternate sectional view taken along the line 9, 10 - 9, 10 of FIG. 8;

FIG. 11 is a perspective cutaway view of an alternate embodiment but not according to the invention showing a bait station having a housing that is generally pie wedge-shaped in top view;

FIG. 12 is a schematic view showing an alternative construction for the wick/piercing section interface;

FIG. 13 is a view similar to FIG. 12, but of another alternative construction for the wick/piercing section interface;

FIG. 14 is a view similar to FIG. 13, but of yet another alternative construction for the wick/piercing section interface;

FIG. 15 is a perspective view of another alternate embodiment of the invention;

FIG. 16 is an exploded view of the embodiment of FIG. 15;

FIG. 17 is a cutaway view taken along the line 17 - 17 of FIG. 15; and

FIG. 18 is a cutaway view taken along the line 18 - 18 of FIG. 15.

### DETAILED DESCRIPTION OF THE PREFERRED EMBODIMENTS

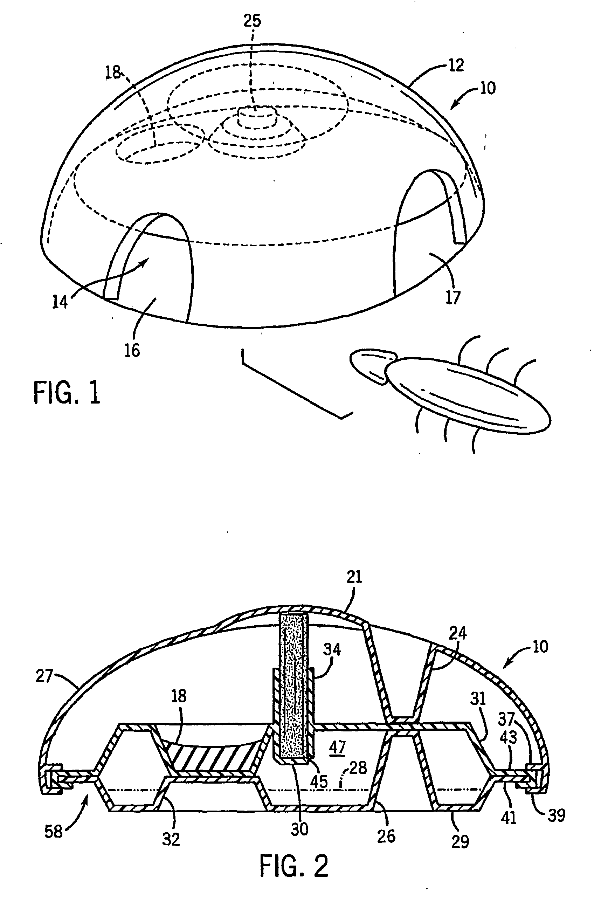

Referring first to FIG. 1, a bait feeding station 10 for controlling crawling and flying pests such as insects, rodents, flying insects, and hymenoptera (hereafter collectively referred to as "pests") is shown. The station 10 includes a housing 12 with entrance apertures 16 and 17 that lead to an internal chamber 14 in which first and second feeding stations are provided.

The first feeding station provides a solid toxicant/bait mix 18. while the second feeding station provides a liquid toxicant/bait mix 28 (see FIG. 2). The latter is provided via a porous wicking element 25.

The wicking element 25 can be constructed of known porous wicking materials such as ceramics, fibrous or porous polymeric materials, small-pored sponges, capillaries, lattice matrices of cellulosic materials, and polyolefenic materials. However, where it is to be used to pierce a portion of the lower base, it should be of sufficient strength and integrity to perform that function.

The solid bait 18 may be formulated from known solid bait-toxicant formulations, depending on the pest to be controlled. An example of a suitable solid bait-toxicant for ants or cockroaches would be a material that is about 95% bait (peanut butter, peanut oil, vegetable oil, sugar, non-fat dried milk), less than 1 % of a toxicant (e.g. abamectin available from Sygenta, Inc. of Wilmington, Delaware), and the remainder a filler/binder such as a wax.

The liquid bait 28 may be formulated from liquid baiting/toxic formulations that are known, again depending on the pest to be controlled. The liquid can be water, edible vegetable oils such as peanut oil or corn oil, other carriers such as milk, or a combination of two bait forms of varying solubility for example both water and an oil. The toxicants can be, for example, abamectin, boric acid, or indoxacarb, available from DuPont of Wilmington, Delaware. In the case of control of ants and cockroaches one might, for example, use a formulation that is about 90% water, about 5% sugar, a small amount of preservative, and a few percent of a toxicant such as boric acid. Toxicants can also be selected which allow the pests to feed and then depart back to a colony to spread the toxicant and cause "colony kill" or trophylaxis. Of course, the specifics of the bait formulations are not critical to the present invention, apart from one being in liquid form and being wickable.

Referring now to FIG. 2, the housing 12 includes a dome-shaped upper cover portion 27, a contour section 58 having a lower wall 29, and a top wall 31. Cover 27 includes a flexible activation portion 21 which is moveable between an unactivated and an activated position, and is positioned substantially directly over the wicking element 25. First and second flanges 37 and 39, respectively, extend radially inward from the edges of the cover 27, and are vertically offset from each other a distance selected to receive a flanged edge 41/43 extending from the base. The edges 41/43 can snap fit into the space defined between the flanges 37 and 39. Furthermore, the flange 43 extends downward in a substantial U-shaped configuration, the vertical distance between the legs of the U being offset at a spacing selected to receive the flange 41.

The top wall 31 extends horizontally between the cover 27 and the lower wall 29, and is formed to provide an upwardly open recess for receiving the solid bait 18, an internal compartment for retaining the liquid bait 28, and means for mounting the wicking element 25. Starting from the flange edge 43, the top wall 31 initially angles upward and then extends substantially horizontally across the center of the housing 12. To receive the solid bait 18, a recess 35 in the form of a cup is formed.

A tubular collar portion 34, sized and dimensioned to receive the wicking element 25 in slidable fashion, is formed. It is positioned beneath the flexible activation portion 21. The collar 34 includes a sealed bottom 30 which is preferably weakened such that the bottom can be forced open by the wick 25 to provide access to the liquid reservoir 47. The sealed bottom 30 may simply be thin enough to be easily pierced. Alternatively, the sealed bottom 30 may be scored or otherwise formed with areas of lesser thickness that can part under the force of a downwardly pressed wicking element 25, allowing the sealed bottom to be pierced. As an illustrative example, only, the sealed bottom 30 may be formed with a lesser amount of material at a corner 45 to be therefore weakened.

The base or lower wall 29 extends from the flange edge 41 and extends downward to provide a space between the top wall 31 and the lower wall 29. The base 29 can include a pedestal structure 32 which is provided directly below recess 35, and extends upward toward the recess 35 to support the recess 35 and prevent that portion of the bait station 10 from being easily crushed. The remaining space between the top wall 31 and the lower wall 29 forms a toxicant container/reservoir 47 for receiving the liquid bait 28. The liquid bait reservoir 47 including the liquid toxicant 28 is positioned beneath the collar 34 holding the wick 25, and is separated from the wick 25 by the sealed bottom 30. For shipping and storage the wick 25 is maintained in the collar 34 sealed off from the toxicant 28 by the sealed bottom 30.

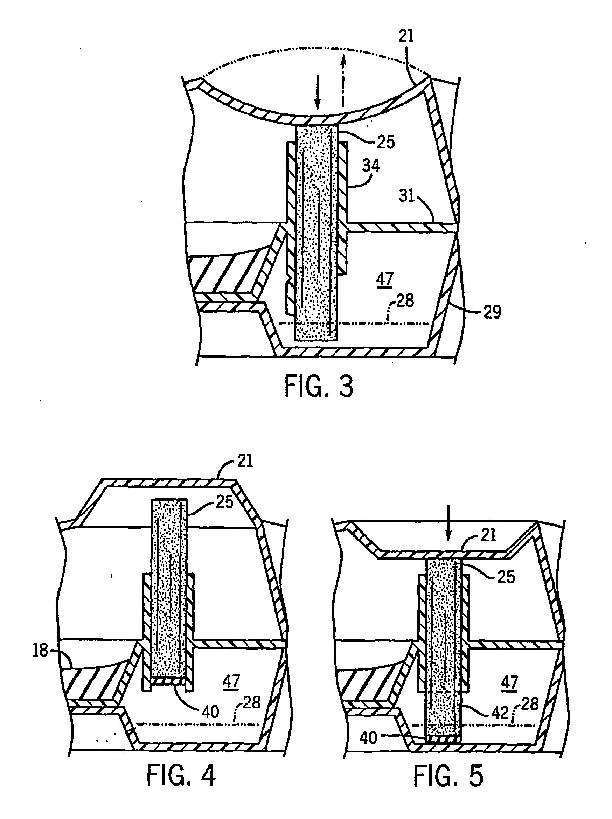

Referring now to FIG. 3, when the feeding station is ready to be used, a user presses on the flexible activation portion 21 of the domed upper cover 27 which applies a force on the wick 25 causing the wick 25 itself to break through the sealed portion 30 at the weakened corner 45, whereby the wick 25 can then enter the reservoir 47 and begin to absorb and convey liquid toxicant 28. As shown, the cover 27 can also include a support portion 24 extending downward to inhibit other portions of the cover 27 from flexing. The wall 29 can include a matching pedestal structure 26 for maintaining the integrity of the rest of the bait station 10.

It should be appreciated that the seal 30 prevents liquid from entering the wick 25 until the wick 25 is selectively forced down and through the weakened seal 30. Therefore, the liquid bait 28 can be maintained in an enclosed chamber until such time as it is desired to activate the station 10. This prevents evaporation or spillage of the liquid 28 during shipping and storage of the station 10.

Referring next to FIG. 4, in a second embodiment, the wick 25 is provided with a sealed end 40, while the sides of the wick 25 are not so sealed. The collar 34 for receiving the wick 25 can be provided with a thin, weak lower seal, or be left open to provide an access port to the reservoir 47, as the sealed end 40, when in the collar, limits liquid from entering the wick 25. It further limits evaporation through the wick 25.

When the activation area 21 of the cover is activated to force the wick 25 through the sealed bottom 30 or directly into the liquid container 47, the wick 25 absorbs liquid toxicant 28, e.g. through the unsealed sides 42. The cover 27 is constructed to be bi-stable, or to "oil can" such that the cover 27 becomes fixed in either of the inactive (FIG. 4) position or the active (FIG. 5) position.

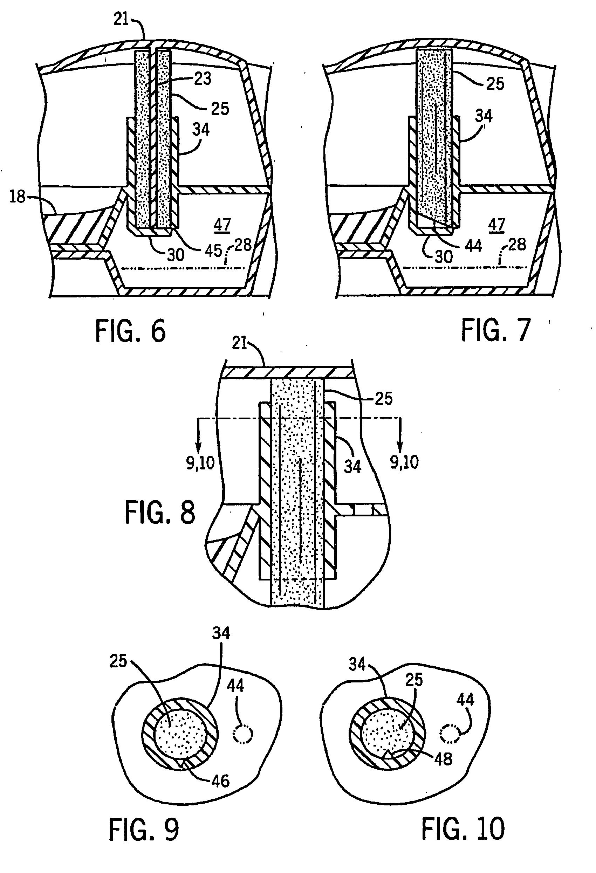

Referring next to FIG. 6, the activation area 21 of the housing 12 is formed to include a downwardly-extending post or stiffener 23 which extends through the center of the wicking element 25, to stiffen it. When the activation area 21 is depressed, the downwardly-extending post 23 helps retain the shape of the wicking element 25, allowing the wick to more easily be forced through the sealed bottom 30, and into the liquid reservoir 47. In some embodiments, the post 23 can extend all the way through the wick 25 to provide a leading and of the piercing element.

Referring now to FIG. 7, in yet another embodiment of the invention the wicking element 25 has an angled bottom 44, to encourage the easy piercing of the sealed bottom 30. The angled bottom 44 can simply provide a sharper, more focused contact point to engage the sealed bottom 30. Alternatively, the angled bottom 44 can be specifically directed toward a weakened feature such as the weakened corner 45 in the sealed bottom 30 of the collar 34. Other shaped lower ends of the wicking element 25 that will apply locally focused force are also possible such as, by way of example only, a pointed bottom (not shown).

Referring next to FIGS. 8 through 10, two alternative structures are shown for venting the liquid reservoir. To prevent a partial vacuum from forming as liquid is drawn from the reservoir, one could provide a pierceable vent hole 44 that can be separately pierced by a consumer. However, it is preferable for the vent to be created by a groove 46 in the collar 34 extending alongside the wick 25 to the reservoir 47, or, in the alternative, a groove 48 in the wick.

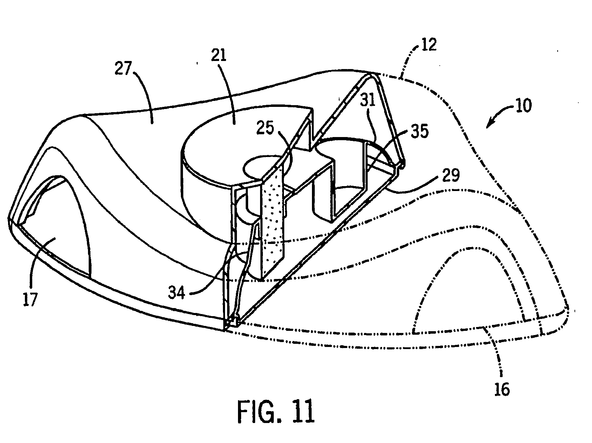

Referring next to FIG. 11, an alternative embodiment of a bait station 10 but not according to the invention is shown. In this embodiment the housing 12 is generally pie wedge-shaped in top view. By pie wedge-shaped we mean essentially straight along two sides that diverge (preferably at about a right angle), with an essentially contoured arc connecting the divergent ends. In accordance with the invention entrances 16 and 17 are provided along the arc. Additional entrances (not shown) can also be provided in the straight sides of the wedge-shaped housing 12.

When the bait station 10 is positioned in a room corner with the straight sides paralleling the room, the station can still be accessed by the entrances 16 and 17. Further, if one places the arc side against a room wall, regardless of how it is positioned, at least one of the entrances will always be accessible, and any additional entrances in the straight sides also will be unobstructedly available, as well.

A "blow/fill/seal" manufacturing can be used to form the bait station. In blow/fill/seal, the liquid-containing container is formed using blow-molding techniques, and is provided with a weakened area that is molded into the container in the sealed area 30 that the wick 25 will eventually pierce, as described above. The container can be filled from one end and sealed off. A recess 35 can be molded directly in an upper surface of the base to be later filled with a solid bait 18.

Wick 25 is positioned above the weakened area 30, and a cover 27 is snapped on the container, covering the container and wick. Entrances 16 and 17 are formed in the cover, or between the cover and container, and may include doors through which the target pests can enter.

The cover 27 can flex downwardly when pressed from above, allowing a user to force the wick 25 through the weakened area 30 and down into the liquid 28. Liquid then is transported up to the part of the wick 25 that remains projecting up into the chamber, and the insects can feed on the liquid directly from the wetted wick, or with particularly effective wicks on drool of the liquid off the wick.

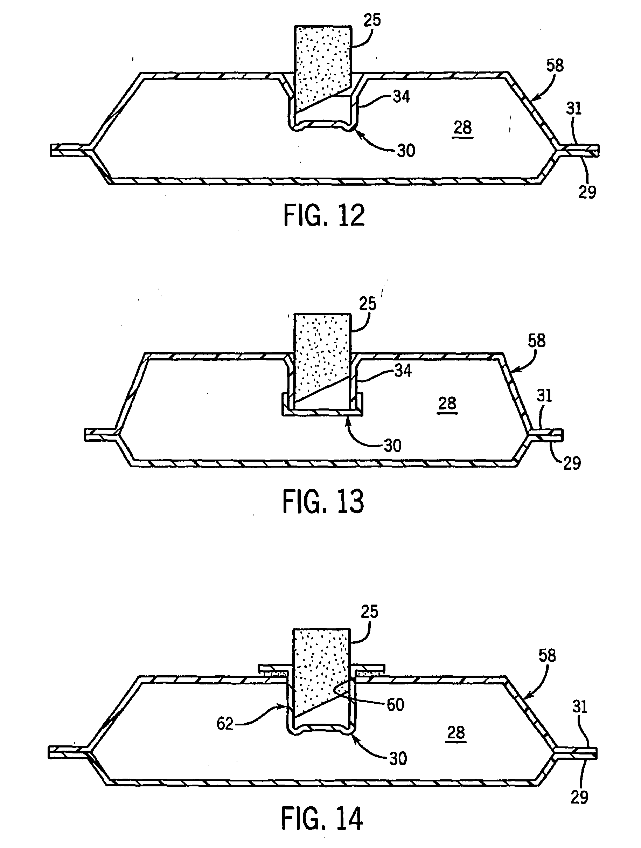

Referring next to FIGS. 12 - 14, dual bait stations 10 constructed using "form/fill/seal" methods are shown. Here, the term "form" refers to thermoforming, and the container 58 is made by thermoforming from any suitable plastic, such as polyvinyl chloride (PVC), glycol modified polyethylene terephalate (PETG), high density polyethylene (HDPE), or the like. Sheet plastic can be heated and formed over a mandrel or, alternatively, forced into a mold. Using these processes, an open-faced, single layer structure is produced. A base comprising both a lower wall 29 and an upper wall 33 which can be formed and then joined together. The edges of the joined parts can be, for example, sealed via ultrasonic welding, heat sealing, use of an adhesive, or any other of a number of conventional ways to join plastic parts.

Referring now specifically to FIG. 12, the base top 31 here is formed with a collar 34 that is sized and dimensioned to receive and guide the wick 25. Here, the collar 34 can be formed with a unitarily formed floor 30 through which the wick 25 will be forced when an activation portion 21 of the cover 27 is depressed. To enable easy breakage, the sealed bottom 30 can include lines of weakness to allow the wick 25 to be forced through the sealed bottom 30 or otherwise weakened as described above.

These lines could be formed, for example, in a second operation, after the top 31 is thermoformed. Appropriate forming processes can include, for example, pressing a hot or sharp tool into the floor 30 of the collar 34 to create lines that partially penetrate the thickness of the sealed bottom 30. These lines could be provided, for example, as an "X" pattern in the seal 30, a peripheral line partly or even completely around the floor, or any other effective pattern.

Referring now to FIG. 13, alternatively, the collar 34 can be formed initially without a seal 30. The seal 30 can then be fastened or otherwise added as a secondary film provided across the open bottom of the collar 34. The film could be, for example, aluminum or other soft metal, Mylar, or any suitable plastic capable of being pierced by the wick 25. The film could be attached to the bottom of the well with an adhesive, heat sealing, or other sealing methods appropriate to the chosen materials. Once the top 31 is completed, the filling and assembly process can be used as described above.

Referring now to FIG. 14, in another alternative, the top 31 can be made with an opening 60 into which is fit a secondary plug 62 in which the bottom has either been molded or lined to create a sealed bottom 30 weakened for easy piercing, or has a film arrangement fastened in place comparable to the film described with respect to the embodiment of FIG 13. The top 31 could then be filled and sealed to the lower wall 29. Alternatively, the top 31 and bottom 29 could be made and sealed together before the secondary plug 62 is installed.

The base could be filled through the opening in the top 31, with the secondary plug 62 then positioned and sealed into place as the final step that closes the base. If the base's top is made first, filled, and then sealed to the bottom, the secondary plug can be fastened to the top by ultrasonic welding, heat sealing, adhesive, or any other standard means. If the secondary plug is assembled to the rest of the base as a final step, use of an adhesive seal is preferred.

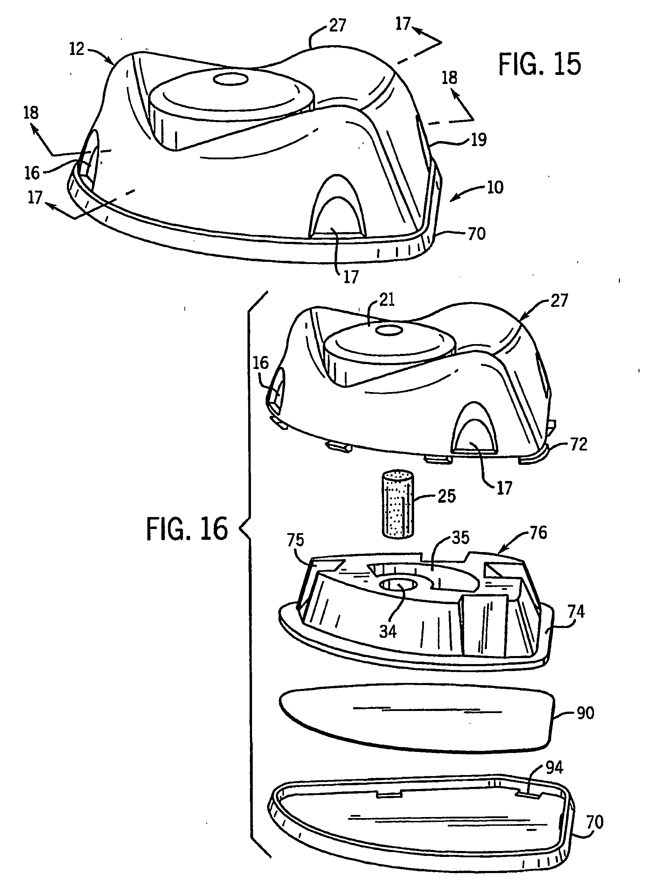

Referring now to Fig. 15, a preferred embodiment of a bait station 10 constructed in accordance with the invention is shown. Here, the bait station 10 and includes a housing 12 comprising cover 27 with entrances 16, 17, and 19, and a rigid base 70 that is coupled to the cover 27. Referring now also to Fig. 16, an enclosed container 71 is provided in a space defined between the cover 27 and rigid base 70, and both a liquid and a solid bait 28 and 18, respectively, can be provided in the container 71. As shown the bait station 10 of Fig. 15 is substantially pie-wedged in shape as described above with reference to Fig. 11. Various other shapes, however, can also be used.

Referring now to Fig. 16, the cover 27 is generally constructed of a substantially rigid material. A flexible activation portion 21, however, which can be constructed of a thinner portion of material is provided to be positionable over a wick 25 and can be flexed between an activated and an unactivated position to drive the wick 25 into the container 71, as described above. The flexible portion 21 can be substantially centered in the cover 27 and the surface of the cover 27 surrounding the flexible activation portion 21 can be raised above the flexible activation portion 21 to minimize the possibility of accidental activation of the wick 25, if for example, the bait station 10 is accidentally stepped on, dropped, or otherwise crushed. A plurality of tabs or clips 72 extend outwardly around the lower perimeter of the cover 27, and are sized and dimensioned to be snap fit into mating apertures 94 in the base 70, described below. As shown, the clips 72 can be substantially wedge shaped, although various other methods for constructing clips will be apparent to those of skill in the art. Although various types of materials could be used to construct the cover 27, the cover 27 is preferably injection molded from a copolymer such as polypropylene or other materials which can be characterized as rubbery and have high tensile strength. Homopolymers and other types of materials can also be used. Furthermore, while three entrances 16, 17, and 19 are shown, it will be apparent that additional entrances could be provided at various locations around the perimeter of the cover 27.

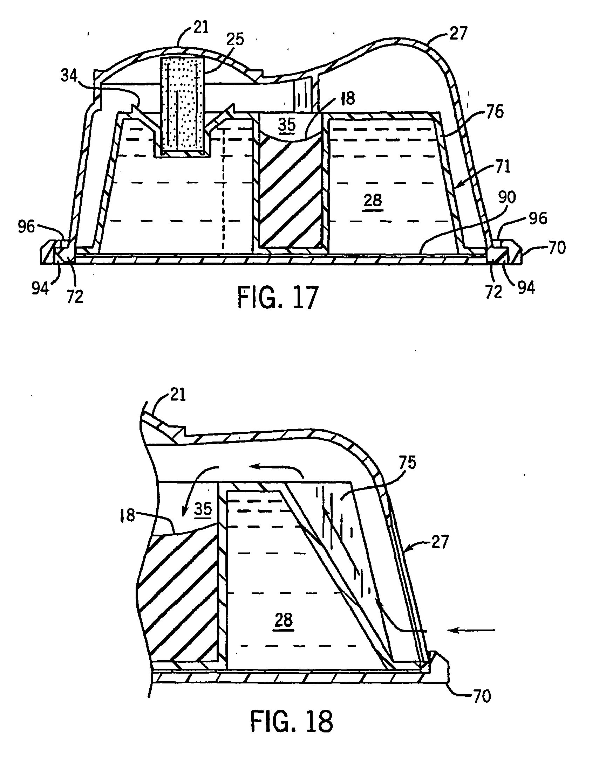

. Referring still to Fig. 16, the container 71 includes an upper portion 76 that is formed as an open-bottomed reservoir 47, including a planar upper surface 78 and downwardly extending side potions extending from the planar upper surface to an open bottom (not shown). A flange 74 extends outwardly around the perimeter of the upper portion 76. A recessed cup 35 is formed in the planar upper surface 78 to receive a solid bait 18. Also defined in an upper surface 78 is a guide sleeve or tubular collar portion 34 sized and dimensioned to receive the wick 25. Referring now also to Fig. 17, the bottom 30 of the tubular collar potion 34 is weakened, as described above, to allow the wick 25 to be forced through the upper portion 76 of the container 71 and into the liquid bait 28. Referring now also to Fig. 18, a plurality of ramps 75, equal in number to the number of entrances provided in the cover 27, can be provided in the sides of the upper portion 76 to allow pests to enter and approach the solid and liquid baits 18 and 28, respectively. The upper portion 76 is substantially rigid, and is preferably injection molded from a polypropylene olefin material, although various other copolymer and homopolymer materials can also be used. To increase the rigidity and prevent breakage of the upper portion 76, ribs can also be formed extending downwardly from the planar upper surface 78 toward the open bottom of the upper portion 76.

Referring still to Fig. 16, a liquid bait 28 is received in the upper portion 76 of the container 71, and the upper portion is then sealed with a seal 90 which can be, as shown, planar in construction. The seal 90 is preferably constructed of a material such a non-PVC SARAN^{™} film that is heat sealed to the bottom of the upper portion 76, and particularly to the flange 74 provided around the perimeter of the upper portion 76. Other types of film materials such as polyethylene teraphalate (PET), polybutylene terapathalate (PTB), glycol modified polyethylene terephthalate, (PETG), or recycled polyethylene terephthalate (RPET) can also be used. Furthermore, other methods of sealing plastics including ultrasonic welding and adhesives, can also be used.

Referring now to Figs. 16 and 17, the base 70 is sized and dimensioned to mate with the cover 27 and is constructed of a rigid material, preferably a copolymer such as polypropylene although, as described above, various other materials including both copolymers and homopolymers could also be used. A plurality of apertures 94 are spaced around the perimeter of the base 70, and are sized and dimensioned to receive the clips 72 in the cover 27. Each of the apertures 94 includes an inwardly extending tab 96, that mates with the clips 72 to lock the clips into position, providing a substantially rigid shell around the enclosed container 71.

Referring still to Fig. 17, the bait station 10 is assembled initially by providing a liquid bait 28 within the upper portion 76 of the enclosed container 71, and sealing the bottom with the seal 90 which, as described above, can be heat sealed to the flange 74 of the upper portion 76. A solid bait 18 can then be positioned in the cup 35 formed in the surface of the upper portion 76 of the bait station 10, and a wick 25 positioned in the guide sleeve or collar 34 in the upper portion 76. The enclosed container 71 is positioned on the base 70, and the cover 27 is coupled to the base by snapping the clips 72 into the apertures 94 in the base 70. As assembled, therefore, the enclosed container 71 is free to move within the space defined between the cover 27 and the base 70, while being enclosed between substantially rigid components. The cover 27 and base 70 provide a protective cover around the enclosed container 71 which minimizes the ability of externally applied forces to and break or crush the enclosed container 71. Furthermore, because of the external shell, a force applied to the container 71 is prevented from causing "pumping" of the liquid bait 28 maintained in the container 71 through the wick 25.

Although preferred embodiments have been shown and described, it will be apparent that various modifications can be made to the features described above. For example, although a dual bait feeding station is shown, it will be apparent that a liquid only station could also be provided using some aspects of the above invention., Furthermore, various features of the feeding stations described above could be combined in various ways to provide alternate constructions. Additionally, the toxicants and baits could be could be varied depending on need (e.g. a rodenticide for rodents).

Still other modifications of the bait station and other aspects of the present invention will become apparent to those skilled in the art from an examination of the above patent specification and drawings. Therefore, the invention is not to be limited to the preferred embodiments only.

### Industrial Applicability

The invention provides bait stations suitable for housing and safely shipping multiple types of toxicants, with improved systems for activation of a liquid feeding portion of the device.

## Claims

1. A bait station (10) for controlling a pest, comprising:
a housing (12) having a dome-shaped upper cover section (27) and a contour section (58) wherein said contour section (58) includes a container (47) with an access port to a liquid toxicant (28), the access port being closed with a seal (30), the cover section (27) being positioned over the container (47);
a wick (25); and
a retaining structure (34) for mounting the wick (25) over the seal (30);
wherein the bait station (10) is constructed such that downward movement of a portion (21) of the cover section (27) drives the wick (25) through the access port opening the seal (30) and causing the wick (25) to contact the liquid toxicant (28) in the container (47);
wherein the retaining structure (34) and access port comprise a guide sleeve (34) formed in a substantially rigid upper portion of the container, which receives the wick (25) and in which the wick (25) is slideable, said downward movement causing the wick (25) to slide within the guide sleeve (34) from a position above the seal (30) to a position in which it projects from the end of the sleeve into the container (47) to contact said liquid toxicant (28);
wherein the contour section (58) comprises a lower wall (29) and a top wall (31), said container (47) being formed between said lower wall (29) and said top wall (31) with the top wall (31) comprising the said substantially rigid upper portion of the container, **characterized in that** the cover section (27) has a flexible actuation portion (21) directly over the wick which when pressed downwardly drives said wick (25) through the said access port opening the seal (30).

2. A bait station (10) according to claim 1, wherein the top wall (31) and lower wall (29) seal against each other at peripheral radial flanged edges (41, 43).

3. The bait station of claim 1 or 2, wherein the container (47) is enclosed and the seal (30) comprises a pierceable section of the enclosed container (47) at the end of the guide sleeve (34).

4. The bait station of claim 3, wherein the pierceable section is provided as part of an upper wall (31) of the enclosed container (47).

5. The bait station of claim 4, wherein the upper wall (31) includes an open recess at least partially housing a solid bait and an upwardly directed collar (34) which surrounds the pierceable section of the wall.

6. The bait station of claim 1 or 2, wherein the seal (30) comprises at least one of a lower sealing cap (30) and a lower seal (40) affixed to a lower end of the wick (25).

7. The bait station of claim 1 or 2, wherein the movable portion (21) of the cover (27) is a bi-stable flexible area of the cover, which has an upward position prior to use of the device and a downward position once the device is activated.

8. The bait station of claim 1 or 2, wherein the enclosed container (47) is blow moulded.

9. The bait station of any preceding claim, wherein the base station has a base (70), at least one of the cover (27) and the base (70) comprises a plurality of tabs (72) and the other of the cover (27) and the base (70) comprises a plurality of mating apertures (94) for receiving the tabs (72) to couple the cover (27) to the base (70).

10. The bait station of claim 1 or 2, wherein the seal comprises a flexible film sealed to the rigid upper portion.

## Patentansprüche

1. Köderstation zur Bekämpfung eines Schädlings mit:
einem Gehäuse (12) mit einem kuppelförmigen oberen Abdeckteil (27) und einem Konturteil (58), der einen Behälter (47) mit einer Öffnung aufweist, die Zugang zu einem flüssigen Giftstoff (28) bietet, wobei die Zugangsöffnung mit einem dichten Verschluss (30) verschlossen und der Abdeckteil (27) über dem Behälter (47) angeordnet ist;
einem Docht (25); und
einer Halterung (34) zum Haltern des Dochts (25) über dem Verschluss (30);
wobei die Köderstation (10) so aufgebaut ist, dass eine Abwärtsbewegung eines Bereichs (21) des Abdeckteils (27) den Docht (25) durch die Zugangsöffnung treibt, dabei den Verschluss (30) öffnet und bewirkt, dass der Docht (25) den flüssigen Giftstoff (28) im Behälter (47) kontaktiert;
wobei die Halterung (34) und die Zugangsöffnung eine Führungshülse (34) aufweisen, die in einem im wesentlichen steifen oberen Behälterteil ausgebildet ist und den Docht (25) aufnimmt und in der der Docht (25) verschiebbar ist, wobei mit der genannten Abwärtsbewegung der Docht (25) in der Führungshülse (34) aus einer Lage über dem Verschluss (30) in eine Lage bewegbar ist, in der er aus dem Ende der Hülse in den Behälter (47) ragt, um den flüssigen Giftstoff (28) zu kontaktieren; und
wobei der Konturteil (58) eine untere Abschlussfläche (29) und eine obere Abschlussfläche (31) aufweist, der Behälter (47) zwischen den Abschlussflächen (29, 31) ausgebildet ist, wobei die obere Abschlussfläche (31) den im wesentlichen steifen Oberteil des Behälters darstellt, **dadurch gekennzeichnet, dass** der Abdeckteil (27) unmittelbar über dem Docht einen flexiblen Betätigungsbereich (21) aufweist, der, wenn herabgedrückt, den Docht (25) durch die Zugangsöffnung treibt und dabei den Verschluss (30) öffnet.

2. Köderstation (10) nach Anspruch 1, bei der die obere und die untere Ab= schlussfäche (31, 29) an außen umlaufenden flanschartigen Rändern (41, 43) gegeneinander dicht abschließend miteinander verbunden sind.

3. Köderstation nach Anspruch 1 oder 2, deren Behälter (47) umschlossen ist, wobei der Verschluss (30) einen durchstoßbaren Bereich des umschlossenen Behälters (47) am Ende der Führungshülse (34) aufweist.

4. Köderstation nach Anspruch 3, bei der der durchstoßbare Bereich Teil einer oberen Abschlussfläche (31) des umschlossenen Behälters (47) ist.

5. Köderstation nach Anspruch 4, bei der die obere Abschlussfläche (31) eine offene Vertiefung, die einen festen Köder mindestens teilweise aufnimmt, und einen aufwärts ragenden Kragen (34) aufweist, der den durchstoßbaren Bereich der Abschlussfläche umgibt.

6. Köderstation nach Anspruch 1 oder 2, bei der der Verschluss (30) mindestens entweder eine Verschlusskappe (30) oder einen Verschluss (40) aufweist, die bzw. der an einem unteren Ende des Dochts (25) befestigt ist.

7. Köderstation nach Anspruch 1 oder 2, bei der der bewegbare Bereich (21) der Abdeckung (27) ein bistabiler flexibler Bereich derselben ist, der vor dem Einsatz der Vorrichtung eine obere und nach Aktivierung derselben eine untere Lage einnimmt.

8. Köderstation nach Anspruch 1 oder 2, deren umschlossener Behälter (47) blasgeformt ist.

9. Köderstation nach einem der vorgehenden Ansprüche, die einen Unterteil (70) aufweist, wobei mindestens entweder die Abdeckung (27) oder der Unterteil (70) eine Vielzahl von Laschen (72) und komplementär zu diesen der Unterteil (70) bzw. die Abdeckung (27) eine Vielzahl entsprechender Öffnungen (94) zur Aufnahme der Laschen (72) aufweisen, um die Abdeckung (27) mit dem Unterteil (70) zu verbinden.

10. Köderstation nach Anspruch 1 oder 2, bei der der Verschluss eine flexible Folie aufweist, die gegen den steifen Oberteil dicht abschließend mit diesem verbunden ist.

## Revendications

1. Point d'appât (10) servant à maîtriser un animal nuisible, comprenant :
un boîtier (12) comportant une section de protection supérieure en forme de dôme (27) et une section de contour (58), ladite section de contour (58) incluant un récipient (47) présentant un orifice d'accès à un produit nocif liquide (28), l'orifice d'accès étant fermé par un dispositif d'étanchéité (30), la section de protection (27) étant positionnée sur le récipient (47) ;
une mèche (25) ; et
une structure de retenue (34) servant à monter la mèche (25) sur le dispositif d'étanchéité (30) ;
dans lequel le point d'appât (10) est construit de sorte que le déplacement descendant d'une partie (21) de la section de protection (27) entraîne la mèche (25) à travers l'orifice d'accès ouvrant le dispositif d'étanchéité (30) et amenant la mèche (25) à entrer en contact avec le produit nocif liquide (28) dans le récipient (47) ;
dans lequel la structure de retenue (34) et l'orifice d'accès comprennent un manchon de guidage (34) formé dans une partie supérieure sensiblement rigide du récipient, qui reçoit la mèche (25) et dans lequel la mèche (25) peut coulisser, ledit déplacement descendant amenant la mèche (25) à coulisser dans le manchon de guidage (34) depuis une position au-dessus du dispositif d'étanchéité (30) jusqu'à une position dans laquelle elle se projette depuis l'extrémité du manchon dans le récipient (47) pour entrer en contact avec ledit produit nocif liquide (28) ;
dans lequel la section de contour (58) comprend une paroi inférieure (29) et une paroi supérieure (31), ledit récipient (47) étant formé entre ladite paroi inférieure (29) et ladite paroi supérieure (31), la paroi supérieure (31) comprenant ladite partie supérieure sensiblement rigide du récipient, **caractérisé en ce que** la section de protection (27) comporte une partie d'actionnement flexible (21) directement sur la mèche, laquelle partie, lorsqu'elle est pressée vers le bas, entraîne ladite mèche (25) à travers ledit orifice d'accès ouvrant le dispositif d'étanchéité (30).

2. Point d'appât (10) selon la revendication 1, dans lequel la paroi supérieure (31) et la paroi inférieure (29) se scellent l'une contre l'autre, au niveau de bords radiaux périphériques à collerette (41, 43).

3. Point d'appât selon la revendication 1 ou 2, dans lequel le récipient (47) est entouré et le dispositif d'étanchéité (30) comprend une section perçable du récipient entouré (47) au niveau de l'extrémité du manchon de guidage (34).

4. Point d'appât selon la revendication 3, dans lequel la section perçable est prévue comme une partie d'une paroi supérieure (31) du récipient entouré (47).

5. Point d'appât selon la revendication 4, dans lequel la paroi supérieure (31) inclut un évidement ouvert logeant au moins partiellement un appât solide et un collier (34) orienté vers le haut qui entoure la section perçable de la paroi.

6. Point d'appât selon la revendication 1 ou 2, dans lequel le dispositif d'étanchéité (30) comprend au moins un élément parmi un bouchon d'étanchéité inférieur (30) et un dispositif d'étanchéité inférieur (40) fixé à une extrémité inférieure de la mèche (25).

7. Point d'appât selon la revendication 1 ou 2, dans lequel la partie mobile (21) de la protection (27) est une zone flexible bistable de la protection, qui présente une position ascendante avant l'utilisation du dispositif et une position descendante une fois que le dispositif est activé.

8. Point d'appât selon la revendication 1 ou 2, dans lequel le récipient entouré (47) est moulé par soufflage.

9. Point d'appât selon l'une quelconque des revendications précédentes, dans lequel la station de base comporte une base (70), au moins un élément parmi la protection (27) et la base (70) comprenant une pluralité de languettes (72) et l'autre élément parmi la protection (27) et la base (70) comprenant une pluralité d'ouvertures d'accouplement (94) servant à recevoir les languettes (72) pour coupler la protection (27) à la base (70).

10. Point d'appât selon la revendication 1 ou 2, dans lequel le dispositif d'étanchéité comprend un film flexible scellé à la partie supérieure rigide.
